# EUROPEAN PATENT APPLICATION

(11) **EP 4 614 768 A1**
(43) Date of publication of application: **10.09.2025**
(21) Application number: 23897629.4
(22) Date of filing: 22.11.2023
(51) Int. Cl.: H02K 1/278, B29C 70/32, H02K 1/2791, H02K 15/02, H02K 15/03

(54) **ROTARY ELECTRIC MACHINE PROTECTION RING, METHOD FOR MANUFACTURING SAME, ROTARY ELECTRIC MACHINE, AND ELECTRIC MOBILITY EQUIPMENT**

(30) Priority: 29.11.2022 JP 2022189843; 23.03.2023 JP 2023046257
(71) Applicant: Toray Industries, Inc., Tokyo 103-8666 (JP)
(72) Inventor: MIYAZAKI, Yusuke, Iyo-gun, Ehime 791-3193 (JP); TAKAIWA, Reo, Iyo-gun, Ehime 791-3193 (JP); SANO, Kentaro, Iyo-gun, Ehime 791-3193 (JP); SUENAGA, Kazumasa, Iyo-gun, Ehime 791-3193 (JP); HOSOKAWA, Naofumi, Iyo-gun, Ehime 791-3193 (JP)
(74) Representative: Prüfer & Partner mbB Patentanwälte · Rechtsanwälte
(86) International application number: PCT/JP2023/041914
(87) International publication number: WO 2024/116981

(57) **Abstract**

A rotating electrical machine protection ring constructed by winding a tape-like or sheet-like material made of reinforcing fibers impregnated with resin several times in a circular manner to form a cylindrical laminate and molding the cylindrical laminate, wherein one or more single fibers exist in a winding end region of an outermost layer of the laminate across a plurality of layers from the outermost layer to a layer on an inner circumference side. There is provided a rotating electrical machine protection ring and a manufacturing method of the rotating electrical machine protection ring, the rotating electrical machine protection ring being constructed by molding a fiber-reinforced composite material that has been wound on an outside of a rotor in a rotating electrical machine, wherein the rotating electrical machine protection ring is given improved strength by preventing occurrence of delamination in a winding end portion of the rotating electrical machine protection ring while the rotating electrical machine is operating, thus enabling the rotating electrical machine to rotate at a higher speed.

## Description

### Technical Field

The present invention relates to a rotating electrical machine protection ring, a manufacturing method of the rotating electrical machine protection ring, a rotating electrical machine, and electric mobility equipment.

### Background Art

In recent years, to achieve improved performance of a rotating electrical machine, there has been a demand for rotating the rotating electrical machine at a higher speed. Types of the rotating electrical machines include a Surface Permanent Magnet (SPM) type in which a permanent magnet is disposed on an outer circumference side of a rotor and an Internal Permanent Magnet (IPM) type in which a permanent magnet is embedded in a rotor. When the rotating electrical machine is rotated at a high speed, the permanent magnet disposed on the outer circumference may fall off the rotor due to centrifugal force, or the rotor itself may be damaged. In order to prevent destruction of the rotating electrical machine due to the high-speed rotation, Patent Literature 1 describes a sleeve or rotor sleeve placed on an outer periphery of a permanent magnet disposed on an outer circumference side of a rotary member in an SPM type rotating electrical machine in such a way as to cover the permanent magnet, wherein the sleeve or rotor sleeve is a ring-shaped material and obtained by molding a tape-like fiber tow that is formed by putting together a plurality of threadlike fibers being arranged in one direction into a flat shape by using resin.

As the ring-shaped material described above, a fiber-reinforced composite material is used because of its high strength, lightweight, and the like. It is described that a material in which carbon fiber in particular is used as a reinforcing fiber is preferred.

Patent Literature 2 describes a retainer that holds magnets from an outer circumference side, the magnets being arranged in such a way as to surround an outer circumference of a rotation shaft of a rotor in a rotating electrical machine in an annular fashion as well as a technique in which the retainer is constructed by winding a fiber tow several times in a circular manner to be stacked, the fiber tow being formed by putting together a plurality of fibers into a tape-like shape, and bonding the fiber tow integrally with resin serving as a matrix, and delamination of the fiber tow in a winding end portion is prevented by cutting the fiber tow at a winding end in a substantially V shape.

### Citation List

### Patent Literature

Patent Literature 1: JP 2019-71763 A
Patent Literature 2: JP 2019-110622 A

### Summary of Invention

### Technical Problem

In the invention disclosed in Patent Literature 1, when a strong tension is applied to the aforementioned sleeve or rotor sleeve (ring) due to centrifugal force caused by the high-speed rotation of the rotating electrical machine, the ring is destroyed due to delamination, from other portions, of the material constituting the winding end portion of the ring constructed by molding the tape-like fiber tow that has been wound, which causes a problem of reduced strength.

In the invention disclosed in Patent Literature 2, although it is intended to prevent the delamination in the winding end portion by cutting the fiber tow at the winding end in the V shape, stress is concentrated in a distal end portion that has been cut in the V shape, and an effect of preventing the delamination in the winding end portion is not satisfactory.

In the present invention, the ring-shaped material that is wound on an outside of the rotor of the rotating electrical machine and may be used for protecting the rotor is referred to as a rotating electrical machine protection ring.

It is an object of the present invention to remedy the drawback of the conventional art and provide a rotating electrical machine protection ring, a manufacturing method of the rotating electrical machine protection ring, a rotating electrical machine, and electric mobility equipment, the rotating electrical machine protection ring being constructed by molding a fiber-reinforced composite material that has been wound on an outside of a rotor in the rotating electrical machine, wherein the rotating electrical machine protection ring is given improved strength by preventing occurrence of delamination in a winding end portion of the rotating electrical machine protection ring while the rotating electrical machine is operating, thus enabling the rotating electrical machine to rotate at a higher speed.

### Solution to Problem

To solve the problems described above, the present invention includes the following configurations:
(1) A rotating electrical machine protection ring constructed by winding a tape-like or sheet-like material made of reinforcing fibers impregnated with resin several times in a circular manner to form a cylindrical laminate and molding the cylindrical laminate, wherein one or more single fibers exist in a winding end region of an outermost layer of the laminate across a plurality of layers from the outermost layer to a layer on an inner circumference side.
(2) The rotating electrical machine protection ring according to (1), wherein the one or more single fibers existing across a plurality of the layers include a fiber that constitutes the tape-like or sheet-like material.
(3) The rotating electrical machine protection ring according to (1), wherein the one or more single fibers existing across a plurality of the layers include a fiber other than the one that constitutes the tape-like or sheet-like material.
(4) A manufacturing method of a rotating electrical machine protection ring obtained by winding a tape-like or sheet-like material made of reinforcing fibers impregnated with resin several times in a circular manner to form a cylindrical laminate and subsequently molding the cylindrical laminate, wherein a fiber shoving tool is inserted in a winding end region of the laminate into an outermost layer toward a layer on an inner circumference side to cause a fiber that constitutes the tape-like or sheet-like material in a layer on an outer circumference side including the outermost layer to penetrate into a layer on the inner circumference side.
(5) A manufacturing method of a rotating electrical machine protection ring obtained by winding a tape-like or sheet-like material made of reinforcing fibers impregnated with resin several times in a circular manner to form a cylindrical laminate and subsequently molding the cylindrical laminate, wherein a fiber that constitutes the tape-like or sheet-like material and an auxiliary thread being a fiber other than the fiber that constitutes the tape-like or sheet-like material are sewn across a plurality of layers from an outermost layer to a layer on an inner circumference side of the laminate in a winding end region.
(6) A rotating electrical machine including the rotating electrical machine protection ring according to any one of (1) to (3), wherein a single output of the rotating electrical machine is 200 kW or more.
(7) A rotating electrical machine including the rotating electrical machine protection ring according to any one of (1) or (3), wherein a single output density of the rotating electrical machine is 6 kW/kg or more.
(8) Electric mobility equipment including the rotating electrical machine according to (6) or (7). Advantageous Effects of Invention

The rotating electrical machine protection ring according to the present invention prevents delamination in a longitudinal direction in a winding end portion of the outermost layer of the ring while the rotating electrical machine is operating, thus enabling the rotating electrical machine to rotate at a higher speed.

### Brief Description of Drawings

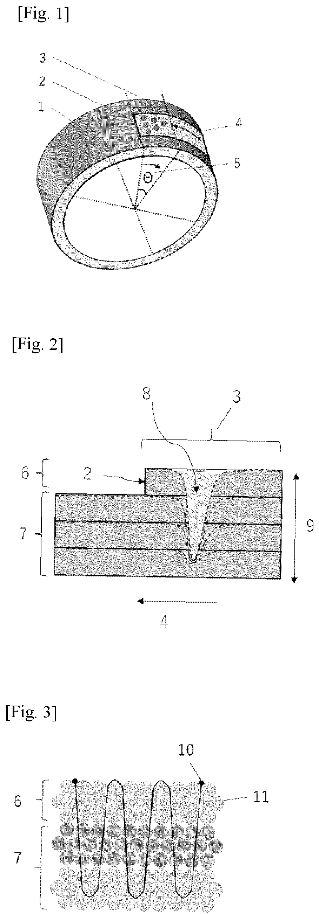

Fig. 1 is a perspective view of a rotating electrical machine protection ring according to an embodiment of the present invention.
Fig. 2 is a cross-sectional side view of the rotating electrical machine protection ring illustrating an embodiment in which a fiber of a tape-like or sheet-like material in a layer on an outer circumference side is caused to penetrate into a layer on an inner circumference side in a winding end region.
Fig. 3 is a cross-sectional front view of the rotating electrical machine protection ring illustrating an embodiment in which a fiber that constitutes the tape-like or sheet-like material is sewn using an auxiliary thread from an outermost layer to a layer on an inner circumference side of the laminate in the winding end region.

### Description of Embodiments

Described below are mainly a configuration of a rotating electrical machine protection ring according to the present invention as described above and a manufacturing method of the rotating electrical machine protection ring.

### (A configuration of the rotating electrical machine protection ring)

The rotating electrical machine protection ring according to the present invention is constructed by winding a tape-like or sheet-like material made of reinforcing fibers impregnated with resin several times in a circular manner to form a cylindrical laminate and molding the cylindrical laminate. The tape-like or sheet-like material may be wound continuously from start to finish or may be wound intermittently in several batches. In the present disclosure, the term "laminate" is used to refer to both states of the material before and after molding.

In the present disclosure, a term "cylindrical" or "cylindrical shape" includes a shape formed after a complete cylindrical shape is deformed by penetration of a fiber in a layer on an outer circumference side including an outermost layer into a layer on an inner circumference side and subsequent subduction of the material.

The reinforcing fiber used for the fiber-reinforced composite material described above is not particularly limited, and glass fiber, carbon fiber, aramid fiber, boron fiber, alumina fiber, silicon carbide fiber, or the like may be used. Two types or more of these fibers may be used in combination. Carbon fiber is preferably used since it enables a lightweight and high stiffness fiber-reinforced composite material to be obtained.

A fiber diameter of the reinforcing fiber used for the aforementioned fiber-reinforced composite material is not particularly limited, but the fiber diameter is preferably 10 µm or less, more preferably 8 µm or less, and even more preferably 6 µm or less, and the fiber having the fiber diameter of 4.5 µm or more may be used.

The fiber diameter of the aforementioned reinforcing fiber is measured as follows. Mass per unit length Af (g/m) and specific gravity Bf (g/cm³) are determined for multiple reinforcing fibers to be measured. Using the obtained values of Af and Bf and the number of fibers Cf in the reinforcing fibers to be measured, the fiber diameter of the reinforcing fibers (µm) is calculated according to the following equation.

The fiber diameter of the reinforcing fibers (µm) = ((Af/Bf/Cf)/π)^{(1/2)} × 2 × 10³

The resin used for the aforementioned fiber-reinforced composite material is not particularly limited, and thermosetting resin such as epoxy resin, unsaturated polyester resin, phenol resin, vinylester resin, or cyanate ester resin or thermoplastic resin such as polyaryletherketone resin, polyether ether ketone resin, polyether ketone resin, polyetherimide resin, polyphenylene sulfide resin, polyether sulfone resin, polyamide resin, or polycarbonate resin may be used. Two types or more of these resins may be used in combination.

The rotating electrical machine protection ring according to the present invention is composed of a laminate formed by winding a tape-like or sheet-like material made of reinforcing fibers impregnated with resin several times in a circular manner.

As the tape-like or sheet-like material, towpreg, prepreg, or a slit tape in which reinforcing fibers are impregnated with resin in advance may be used, or a material that is formed by means of a technique such as a filament winding by winding reinforcing fibers impregnated on the spot with resin in a circular manner may be used. The slit tape is a type of tape-like material and created by cutting a material in which reinforcing fibers are impregnated with resin in advance into a tape-like shape having a specified width.

The width of the tape-like or sheet-like material is not particularly limited, however, when a material having a width of 1 mm to 100 mm is used, formation of a laminate by winding the material becomes easier, and this is preferable. Tape-like materials and sheet-like materials cannot be always clearly distinguished. For example, when the material has a width of 100 mm, the material may be assumed to be a tape-like material or a sheet-like material. In contrast, when the material has a width of 1 mm to 30 mm, the material may be usually assumed to be a tape-like material.

In the present invention, one or more single fibers exist in a winding end region of the outermost layer of the laminate across a plurality of layers from the outermost layer to a layer on the inner circumference side. In other words, the one or more single fibers exist across a plurality of layers including the outermost layer. The single fiber existing across a plurality of layers from the outermost layer to the layer on the inner circumference side may be part of a fiber that constitutes the tape-like or sheet-like material or may be a fiber other than the fiber that constitutes the tape-like or sheet-like material. The one or more single fibers just have to exist across two or more layers, preferably exist across three or more layers, and more preferably exist across five or more layers.

Assuming that a line connecting a winding end 2 and a center of a circle, the circle being recognized in a plan view in which the cylindrically shaped laminate according to the present invention is viewed in an axial direction as illustrated in Fig. 1, is an initial line (0°) and Θ is an angle determined relative to the initial line in a direction opposite to a direction of winding the tape-like or sheet-like material, a winding end region 3 of the outermost layer means a circumferential region for which Θ is in a range of 0° to 30° (see Fig. 1).

The winding end 2 is an end in a longitudinal direction of the laminate formed by winding the tape-like or sheet-like material.

In the present invention, at least part of the aforementioned fiber existing across a plurality of layers preferably exists in a range in which Θ is 15° or less from the winding end (Θ = 0°) since an effect of preventing delamination in the rotating electrical machine protection ring may be further improved.

The rotating electrical machine protection ring according to the present invention preferably has an inner diameter of 1 cm to 25 cm. In addition, the thickness of the ring is preferably 0.1 mm to 5.0 mm. When the inner diameter and the thickness of the rotating electrical machine protection ring are in the corresponding range described above, an effect of preventing delamination of the outermost layer of the rotating electrical machine protection ring may be improved, thus enabling the rotating electrical machine to rotate at a higher speed.

The thickness of the laminate does not have to be uniform in the whole circumference of the laminate, and one or more portions of the laminate may bulge or sink.

### (A construction method of the rotating electrical machine protection ring)

In the present invention, formation of the laminate using the tape-like or sheet-like material is usually preferably performed by winding the tape-like or sheet-like material around a columnar material.

As the columnar material, a core material such as a mandrel may be used, or a member to which the rotating electrical machine protection ring is ultimately tightly fit, such as the rotor of the rotating electrical machine, may be used.

Formation of the laminate may be performed by winding the tape-like or sheet-like material repeatedly in a direction that has an angle of 0° relative to a circumferential direction of the columnar material being a reference direction. In other words, the tape-like or sheet-like material may be wound repeatedly on a position having the same height as the columnar material. Alternatively, the tape-like or sheet-like material may be wound helically in a direction that has a different angle relative to the aforementioned reference direction.

When thermosetting resin is used as the resin constituting the material, the rotating electrical machine protection ring can be obtained by means of a technique such as autoclave molding or tape wrapping molding by applying heat to and pressure on the laminate and curing the laminate.

When thermoplastic resin is used as the material, the rotating electrical machine protection ring can be obtained concurrently with formation of the laminate by applying heat to the material using a laser or the like or welding the material by means of vibration welding or ultrasonic welding while winding the material during formation of the laminate.

The one or more single fibers existing across a plurality of the layers may include part of a fiber that constitutes the tape-like or sheet-like material or may include a fiber other than the fiber that constitutes the tape-like or sheet-like material. The one or more single fibers existing across a plurality of the layers may include both a fiber that constitutes the tape-like or sheet-like material and a fiber other than the fiber that constitutes the tape-like or sheet-like material.

When the single fiber existing across a plurality of the layers is part of a fiber that constitutes the tape-like or sheet-like material, if the resin is thermosetting resin, an area in which the fiber constituting the tape-like or sheet-like material is caused to penetrate from the outermost layer into an inner layer may be formed by insertion force generated by shoving the fiber into the winding end region of the laminate using a fiber shoving tool such as a pin or an object having a columnar shape or the like before forming and curing the laminate (see Fig. 2).

Before the laminate is molded and cured or while the laminate is being cured when the resin is thermosetting resin, or while the laminate is molded when the resin is thermoplastic resin, by applying vibrations or ultrasonic waves to the winding end region of the laminate, an area in which a fiber is caused by the vibrations and heating to penetrate from the outermost layer into an inner layer may be formed.

Metal is preferred as a material of a pin being a typical example of the fiber shoving tool, and the fiber shoving tool may be in a form of a single needle or have a configuration in which one or more needles are disposed on a board.

When the single fiber existing across a plurality of the layers is a fiber other than the fiber that constitutes the tape-like or sheet-like material, by sewing the fiber that constitutes the tape-like or sheet-like material and an auxiliary thread composed of a fiber other than the fiber that constitutes the tape-like or sheet-like material into one or more layers from the outermost layer to a layer on the inner circumference side of the laminate before molding and curing the laminate, an area in which the auxiliary thread composed of the fiber other than the fiber that constitutes the tape-like or sheet-like material exists across the one or more layers from the outermost layer to the layer on the inner circumference side may be formed (see Fig. 3). A direction in which the auxiliary thread is sewn is not limited, but it is preferred that the auxiliary thread is sewn in a direction perpendicular to a direction of the fiber that constitutes the tape-like or sheet-like material since delamination in a winding end portion may be further prevented.

The fiber used for the auxiliary thread is not particularly limited as long as it is not the fiber that constitutes the tape-like or sheet-like material, and glass fiber, carbon fiber, aramid fiber, boron fiber, alumina fiber, silicon carbide fiber, or the like may be used. Two types or more of these fibers may be used in combination.

A rotating electrical machine according to the present invention includes the rotating electrical machine protection ring that has been described above, and more specifically, the rotating electrical machine is constructed of the rotating electrical machine protection ring and a rotor. **In** addition, the present invention can provide, by using the rotating electrical machine, electric mobility equipment including the rotating electrical machine.

The electric mobility equipment referred to herein includes, but is not limited to, electric vehicles, electric aircraft, and electric ships, and may be any mobility equipment driven by the rotating electrical machine. The present technique improves the output or output density of the rotating electrical machine and enables the rotating electrical machine to be lightweight and downsized, thus it can be expected that the mobility equipment has an improved traveling distance or greater degrees of freedom in the design. A single output, that is, an output that a single rotating electrical machine can individually generate is preferably 200 kW or more, more preferably 300 kW or more, and the rotating electrical machine having an output of 2000 kW or less may be used. A single output density, that is, a density of the output that a single rotating electrical machine can individually generate is preferably 6 kW/kg or more, more preferably 8 kW/kg or more, and the rotating electrical machine having an output density of 30 kW or less may be used.

### Examples

Specific examples of the construction method of the rotating electrical machine protection ring according to the present invention are described below.

Peeling tests for the laminate were performed in the winding end portion in a manner as described below, and evaluations were made.

### *Peeling test in the winding end portion

The rotating electrical machine protection rings obtained in each of Examples and Comparative Example were used as test specimens, and Naval Ordnance Laboratory Ring Tests (ASTM D2290 (2019)) were performed by using an Instron Universal Testing Machine (manufactured by Instron corporation) with a diameter of a fixture to be placed inside an inner periphery of the test specimen being 130 mm and a crosshead speed being 2.5 mm/min. It was evaluated that delamination in the winding end portion was prevented when the rotating electrical machine protection ring was fractured without delamination found in the winding end portion as a load applied on the ring was increased, and the load applied when delamination occurred was determined as the load at the time of the delamination. The load applied when the ring fractured was determined as the load at the time of the fracture of the ring. When it was found that even a portion of the winding end portion was delaminated from the inner layer, it was determined that delamination had occurred.

### (Example 1)

As the columnar material for forming the laminate, a metallic mandrel having a diameter of 150 mm and a width of 15 mm was used. As the tape-like material constituting the laminate, a plurality of tows, each of the tows consisting of 12000 carbon fibers each having a fiber diameter of 5µm, were aligned and formed into a unidirectionally aligned reinforcing fiber sheet in such a way that the sheet had a weight per unit area of 100 g/m², and an epoxy resin composition composed of bisphenol A type epoxy resin, dicyandiamide (serving as a curing agent), diuron (serving as a curing accelerator), and polyvinyl formal (serving as a viscosity modifier) was impregnated into the sheet, thereby obtaining a sheet-like unidirectional prepreg having resin content of 30% by mass, and the prepreg was cut in such a way as to have a width of 15 mm in a width direction of the fibers aligned in one direction, and tape-like prepregs were prepared.

After the tape-like prepregs that had been cut were attached to the mandrel in such a way that the longitudinal direction of the fibers was perpendicular to an axial direction of the mandrel, the prepregs were wound around the mandrel while applying tension until the thickness became 1 mm, thus the laminate was formed.

In the winding end region of the outermost layer of the laminate that had been formed, a metallic pin having a diameter of 1 mm was inserted at three positions located 1.5 mm from the winding end in a direction opposite to the direction of winding and 3 mm, 7 mm, and 11 mm from one side face of the prepreg in the width direction by aligning the circumference of the pin at those positions. Subsequently, the pin that has been described above was inserted at two positions located 4 mm from the winding end in the direction opposite to the direction of winding and 5 mm and 9 mm from one side face of the prepreg in the width direction by aligning the circumference of the pin at those positions. Lastly, the pin that has been described above was inserted at one position located 6.5 mm from the winding end in the direction opposite to the direction of winding and 7 mm from one side face of the prepreg in the width direction by aligning the circumference of the pin at those positions. As described above, the diameter of the pin was 1 mm, and when there is a plurality of positions for inserting the pin, intervals between adjacent insertion positions were 3 mm. At any of the positions where the pin was inserted, an area in which the fiber was caused to penetrate into the layers on the inner circumference side was formed. It was confirmed from a depth of insertion of the pin that the fiber had penetrated into the fifth inner layer counting from the outermost layer at any of the insertion positions.

After forming the area in which the fiber was caused to penetrate, the laminate was covered with a bagging film, and by pressurizing, heating and curing the laminate using an autoclave, the rotating electrical machine protection ring was constructed.

### (Example 2)

As the columnar material for forming the laminate, a metallic mandrel having a diameter of 130 mm and a height of 15 mm was used. A sheet-like unidirectional prepreg was obtained under the same condition as that in Example 1, and the prepreg was cut in such a way as to have a width of 7 mm in the width direction of the fibers, and tape-like prepregs were prepared.

After the tape-like prepregs that had been cut were attached to the mandrel in such a way that the longitudinal direction of the fibers was perpendicular to the axial direction of the mandrel, the prepregs were wound helically around the mandrel while applying tension until the thickness became 1 mm, thus the laminate was formed.

Two columnar fiber shoving tools having a circular cross-section with a diameter of 0.7 mm and a length of 15 mm were prepared, and these fiber shoving tools were placed on the winding end region of the outermost layer of the laminate that had been formed with a longitudinal direction of the tool oriented in the winding direction and one end of the tool located at the winding end. A midpoint between the two columnar fiber shoving tools in a width direction of the laminate was located 1.95 mm from both ends of the laminate. The laminate was covered with a bagging film, and by pressurizing, heating and curing the laminate using an autoclave, the columnar fiber shoving tools were subducted into the inner layers and inserted into the laminate, and the rotating electrical machine protection ring was constructed.

Looking at the laminate from a side, lengths of portions of the columnar fiber shoving tools that were not inserted into the laminate in a thickness direction of the laminate were determined, based on which calculation was made, and it was confirmed that the fiber had penetrated into the third inner layer counting from the outermost layer.

Peeling tests were performed in the winding end portion for the rotating electrical machine protection rings that had been created by the methods as described above, and the effect of preventing delamination was confirmed for both rotating electrical machine protection rings in Examples 1 and 2. The results are illustrated in Fig. 1.

### (Comparative Example 1)

Under the same condition as that in Example 2 except that the area in which the fiber was caused to penetrate into the layers on the inner circumference side was not formed, the rotating electrical machine protection ring was obtained.

A peeling test was performed in the winding end portion for the rotating electrical machine protection ring that had been created by the method as described above, and the effect of preventing delamination was not confirmed. The result is illustrated in Fig. 1.

**[Table 1]**

| | Example 1 | Example 2 | Comparative Example 1 |
|---|---|---|---|
| Numbers of Layer where one or more single fibers exist(s) | 5 | 3 | 0 |
| Positions where one or more single fibers exist(s) | 5 | 2 | 0 |
| Load at the time of delamination (kN) | 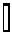 | 15.0 | 10.8 |

### Industrial Applicability

The rotating electrical machine protection ring according to the present invention may be placed on an outside of the rotor of the rotating electrical machine such as a generator or an electric motor, and the rotating electrical machine protection ring may be used for protecting the rotor in which a magnet is contained from destruction caused by centrifugal force while the rotating electrical machine is operating. The present invention can provide a rotating electrical machine constructed of the rotating electrical machine protection ring and the rotor. **In** addition, the present invention can provide electric mobility equipment in which the rotating electrical machine is used.

For example, the rotating electrical machine protection ring may be preferably applied to the SPM type electric motor that has been referred to, and may prevent a permanent magnet from falling off a rotor due to centrifugal force while the rotating electrical machine is operating, thus enabling the rotating electrical machine to rotate at a high speed. In addition, the rotating electrical machine protection ring may be preferably applied to the IPM type electric motor that has been referred to, and may prevent an electrical steel sheet from being destroyed due to centrifugal force while the rotating electrical machine is operating, thus enabling the rotating electrical machine to rotate at a high speed.

### Reference Signs List

1 laminate
2 winding end
3 winding end region
4 winding direction
5 angle Θ determined, assuming that a radius to the winding end 2 of a circle in a plan view of the ring is an initial line (0°), relative to the initial line in a direction opposite to the winding direction 4 of the material
6 outermost layer of the laminate 1
7 inner layer of the laminate 1
8 space generated by the fiber penetrating into the layers on the inner circumference side
9 radial direction of the ring
10 auxiliary thread
11 fiber that constitutes the tape-like or sheet-like material

## Claims

1. A rotating electrical machine protection ring constructed by winding a tape-like or sheet-like material made of reinforcing fibers impregnated with resin several times in a circular manner to form a cylindrical laminate and molding the cylindrical laminate, whereinone or more single fibers exist in a winding end region of an outermost layer of the laminate across a plurality of layers from the outermost layer to a layer on an inner circumference side.

2. The rotating electrical machine protection ring according to claim 1, wherein the one or more single fibers existing across a plurality of the layers include a fiber that constitutes the tape-like or sheet-like material.

3. The rotating electrical machine protection ring according to claim 1, wherein the one or more single fibers existing across a plurality of the layers include a fiber other than the one that constitutes the tape-like or sheet-like material.

4. A manufacturing method of a rotating electrical machine protection ring obtained by winding a tape-like or sheet-like material made of reinforcing fibers impregnated with resin several times in a circular manner to form a cylindrical laminate and subsequently molding the cylindrical laminate, wherein a fiber shoving tool is inserted in a winding end region of the laminate into an outermost layer toward a layer on an inner circumference side to cause a fiber that constitutes the tape-like or sheet-like material in a layer on an outer circumference side including the outermost layer to penetrate into a layer on the inner circumference side.

5. A manufacturing method of a rotating electrical machine protection ring obtained by winding a tape-like or sheet-like material made of reinforcing fibers impregnated with resin several times in a circular manner to form a cylindrical laminate and subsequently molding the cylindrical laminate, wherein a fiber that constitutes the tape-like or sheet-like material and an auxiliary thread being a fiber other than the fiber that constitutes the tape-like or sheet-like material are sewn across a plurality of layers from the outermost layer to a layer on an inner circumference side of the laminate in a winding end region.

6. A rotating electrical machine including the rotating electrical machine protection ring according to any one of claims 1 to 3, wherein a single output of the rotating electrical machine is 200 kW or more.

7. A rotating electrical machine including the rotating electrical machine protection ring according to any one of claims 1 to 3, wherein a single output density of the rotating electrical machine is 6 kW/kg or more.

8. Electric mobility equipment including the rotating electrical machine according to claim 6 or 7.
